Europäisches Patentamt

European Patent Office

Office européen des brevets

(19)

(11) Veröffentlichungsnummer: **0 416 267 B1**

(12) **EUROPÄISCHE PATENTSCHRIFT**

(45) Veröffentlichungstag der Patentschrift: **06.04.94**

(51) Int. Cl.5: **G01F 23/28**, F01M 11/12

(21) Anmeldenummer: **90114393.3**

(22) Anmeldetag: **26.07.90**

(54) **Anordnung zum Messen der Mengenänderung einer Flüssigkeit, insbesondere von Öl in einer Brennkraftmaschine.**

(30) Priorität: **08.08.89 DE 3926207**

(43) Veröffentlichungstag der Anmeldung:
**13.03.91 Patentblatt 91/11**

(45) Bekanntmachung des Hinweises auf die
Patenterteilung:
**06.04.94 Patentblatt 94/14**

(84) Benannte Vertragsstaaten:
**AT DE FR GB IT SE**

(56) Entgegenhaltungen:
DE-C- 3 537 192
GB-A- 1 499 569

(73) Patentinhaber: **Gervé, Andreas, Dr.-Ing.**
**Kriegsstrasse 180**
**D-76133 Karlsruhe(DE)**

(72) Erfinder: **Bielawski, Bernwald**
**Gustav-Schönleber-Str. 19**
**D-7500 Karlsruhe 21(DE)**
Erfinder: **Kastner, Jürgen, Dipl.-Ing.**
**Holunderweg 5A**
**D-7513 Stutensee 1(DE)**
Erfinder: **Gervé, Andreas, Dr.-Ing.-Dipl.-Ing.**
**Kriegstrasse 180**
**D-7500 Karlsruhe(DE)**

(74) Vertreter: **Liesegang, Roland, Dr.-Ing.**
**FORRESTER & BOEHMERT**
**Franz-Joseph-Strasse 38**
**D-80801 München (DE)**

**Beschreibung**

Die Erfindung betrifft eine Meßanordnung zum Messen der Veränderung einer Flüssigkeitsmenge gemäß dem Oberbegrift des Anspruchs 1
Bei einer bekannten Meßanordnung dieser Art (DE-C2-35 37 192) wird die Temperatur in der Flüssigkeitsausgleichsleitung und in der Meßkammer mittels einer geregelten Heizvorrichtung konstant gehalten. Dadurch sind Meßungenauigkeiten vermieden, die sich aufgrund veränderter Umgebungstemperaturen ergeben würden.

Wenngleich die bekannte Meßanordnung eine genaue Messung einer Flüssigkeitsveränderung, zum Beispiel eine Ölverbrauchsmessung in einer Brennkraftmaschine, ermöglicht, bedingt sie einen vergleichsweise großen Aufwand wegen der Heizvorrichtung, des Temperaturreglers und der erforderlichen Wärmeisolierung der Flüssigkeitsleitung.

Bei einer bekannten Meßanordnung zum Erfassen von Niveauunterschieden in Flüssigkeitsbehältern wie Petroleum-Tanks wird von einem akustischen Meßverfahren mit einem in die Flüssigkeit vollständig eingetauchten sendenden Piezo-Element und einem teilweise in die Flüssigkeit eingetauchten empfangenden Piezo-Element Gebrauch gemacht. Dabei ist auch vorgesehen die Meßanordnung zu verdoppeln und eine Flüssigkeitsverbindung zu einer der beiden Meßanordnungen während der Messung zu sparen, während die andere ständig in Verbindung mit dem Flüssigkeitsbehälter bleibt(GB-A-1499569).

Der Erfindung liegt die Aufgabe zugrunde, eine Meßanordnung zum hochgenauen Erfassen der Veränderung einer Flüssigkeitsmenge des Flüssigkeitsverbrauches zu schaffen, welche den Aufwand für eine Heizung, Temperaturregelung und Isolierung vermeidet.

Zur Lösung dieser Aufgabe dienen die Merkmale des Anspruchs 1.
Bei der Meßanordnung nach der Erfindung steht die Meßkammer ebenso wie bei der bekannten Meßanordnung mit der Flüssigkeit im Speicherraum in Verbindung, während die Flüssigkeit in der Referenzmeßkammer vom Speicherraum abgekoppelt ist. Da die Referenzmeßkammer und die Meßkammer den gleichen Umgebungsbedingungen, zum Beispiel Temperaturänderungen der Umgebung, ausgesetzt sind, ändern sich die Flüssigkeitsniveaus in den beiden Kammern aufgrund veränderter Umgebungsbedingungen in gleicher Weise, so daß die Niveaudifferenz der Flüssigkeitsniveaus in den beiden Kammern ein ziemlich genaues Maß für die Flüssigkeitsänderung oder den Flüssigkeitsverbrauch im Speicherraum darstellt. Eine Heizvorrichtung und Temperaturregelung sowie eine Isolierung der Flüssigkeitsausgleichsleitung ist also bei der Anordnung nach der Erfindung überflüssig.

Bei der beschriebenen Anordnung kann eine Meßungenauigkeit dadurch entstehen, daß bei veränderter Umgebungstemperatur sich die Niveaus der beiden Flüssigkeitssäulen unterschiedlich verändern, insbesondere dann, wenn die Niveaus in den beiden Meßkammern nicht gleich sind.

Diese Meßungenauigkeit wird bei einer ersten Weiterbildung der Erfindung dadurch beseitigt, daß die Temperaturen sowohl in der Flüssigkeitssäule als auch in dem darüber befindlichen Luftraum in der Referenzmeßkammer gemessen und in die Auswertvorrichtung eingegeben werden und daß in der Auswertvorrichtung eine durch Temperaturänderung bedingte Änderung der Niveaudifferenz kompensiert wird.

Die genannte Meßungenauigkeit wird bei einer zweiten Weiterbildung der Erfindung dadurch beseitigt, daß die Temperatur in der Flüssigkeitssäule der Referenzkammer gemessen wird, daß in der Referenzmeßkammer eine vermessene Referenzmeßstrecke (AO) fest vorgegeben ist, welche bei einer Temperaturänderung mit dem Abstand (A1) zwischen der Niveaumeßvorrichtung und dem sich mit der Temperatur ändernden Flüssigkeitsniveau in der Referenzmeßkammer verglichen wird, und daß eine durch Temperaturänderung bedingte Niveauänderung in der Referenzmeßkammer mittels der Auswertvorrichtung rechnerisch kompensiert wird.

In beiden Fällen sind die Lufträume in der Meßkammer und der Referenzmeßkammer miteinander verbunden, wobei der Luftraum in der Meßkammer über die Druckausgleichsleitung mit dem Druck über dem Flüssigkeitsniveau im Speicherraum beaufschlagt ist.

Die Erfindung ist im folgenden anhand schematischer Zeichnungen an Ausführungsbeispielen mit weiteren Einzelheiten näher erläutert. Es zeigen:

Fig. 1     ein Schema einer ersten Ausführung einer Meßanordnung nach der Erfindung und

Fig. 2     einen abgewandelten Teil der Ausführung nach Figur 1 gemäß einer zweiten Ausführung der Erfindung.

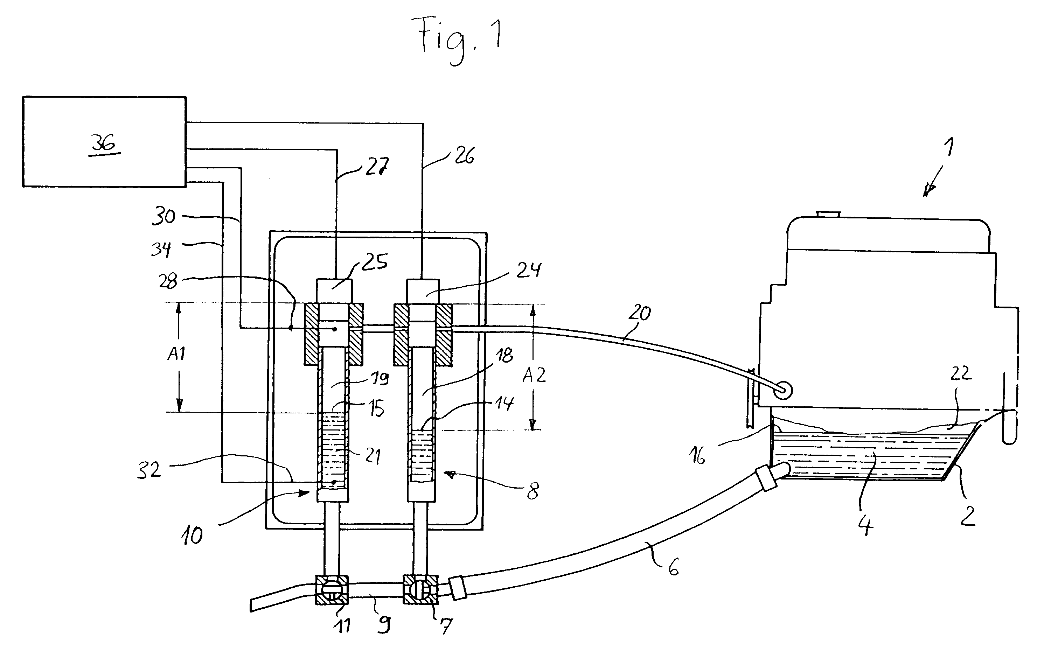

Figur 1 zeigt schematisch eine Meßanordnung gemäß der Erfindung zum Messen des Ölverbrauchs einer Brennkraftmaschine 1 im Betrieb mit herkömmlicher Ölwanne oder Speicherraum 2. Der Sumpf 4 der Ölwanne 2 ist über eine Flüssigkeitsausgleichsleitung 6 und ein 3-Wege-Ventil 7 mit einer etwa auf gleicher Höhe wie die Ölwanne befindlichen Meßkammer 8 verbunden. Ferner ist mit der Meßkammer 8 in einem gemeinsamen Gehäuse 5 eine wie die Meßkammer 8 dimensionierte Referenzmeßkammer 10 parallel dazu angeordnet. Die Referenzmeßkammer 10 ist über ein an das 3-Wege-Ventil 7 anschließendes Leitungsstück 9 und ein weiteres 3-Wege-Ventil 11 mit der Flüssigkeitsausgleichsleitung 6 und somit mit dem Sumpf 4 zur Befüllung verbindbar. In Figur 1 ist jedoch eine Schaltstellung der Ventile 7,11 gezeigt, bei welcher nur die Meßkammer 8 mit der Flüssigkeitsausgleichsleitung 6 verbunden und die Referenzmeßkammer 10 davon abgesperrt ist. Dies ist die Meßstellung.

Das Öl steigt in der Meßkammer 8 nach dem Prinzip der kommunizierenden Röhren auf einen Ölspiegel 14 entsprechend dem Ölspiegel 16 in der Ölwanne an. Die Ölspiegel 14,16 stimmen aufgrund der unterschiedlichen Temperaturen in der Meßkammer 8 und der Ölwanne 2 nicht notwendig überein.

In den Räumen 18,19 oberhalb der Ölspiegel 14,15 der Meßkammer 8 und der Referenzmeßkammer 10 befindet sich Luft. Da die Räume 18,19 über eine Druckausgleichsleitung mit dem Raum 22 oberhalb des Ölspiegels 16 kommunizieren, sind die Drücke in den Räumen 18,19 und 22 ausgeglichen. In der Deckwand der Meßkammern 8, 10 sind je eine Niveaumeßvorrichtung in Gestalt eines Niveausensors 24,25 vorgesehen, der ein Schallsignal abgibt und durch Laufzeitmessung des von dem Flüssigkeitsspiegel 14,15 reflektierten Schallsignales eine entsprechende Spannung über die Signalflußleitung 26,27 abgibt. In der Seitenwand der referenzmeßkammer 10 ist ein Gasthermometer, z.B. in Form eines herkömmlichen Eisen-Konstantan-Thermoelementes 28 vorgesehen, das zur Messung der Temperatur der Luft im Raum 19 dient und als Ausgangssignal $T_L$ eine für die Temperatur $t_L$ im Raum 19 repräsentative Spannung über die Signalflußleitung 30 abgibt. Ein Flüssigkeitsthermometer 32, das ebenfalls als herkömmliches Thermoelement ausgebildet sein kann, taucht in die Flüssigkeitssäule 21 ein und gibt ein für die Temperatur repräsentatives Spannungssignal $T_{F10}$ über eine Signalflußleitung 34 ab. Die Signalflußleitungen 30 und 34 bilden zwei Eingänge einer Auswertvorrichtung 36, die einen Rechner enthält.

An die Auswertvorrichtung ist ein Drucker und ein Grafikbildschirm mit Eingabetastenfeld angeschlossen (nicht gezeigt).

Die beschriebene Meßanordnung arbeitet wie folgt: Vor Beginn der Ölverbrauchsmessung fließt Öl über die Flüssigkeitsausgleichsleitung 6 und die auf "Durchlaß" gestellten 3-Wege-Ventile 7,11 solange von der Ölwanne 2 in die Meßkammer 8 und die Referenzmeßkammer 10, bis sich die Ölniveaus 14,15,16 in der Meßkammer 8, der Referenzmeßkammer 10 und in der Ölwanne 2 in Gleichgewicht befinden. Die Ölniveaus 14,15 in der Meßkammer 8 und der Referenzmeßkammer 10 repräsentieren die Masse des Öles in der Ölwanne. Gleiches Niveau wie in der Ölwanne stellt sich dann ein, wenn die beiden Ölsäulen gleiche Temperatur haben und der Druck über den Ölspiegeln gleich hoch ist.

Für die Ölverbrauchsmessung werden die Ventile 7,11 in ihre in Figur 1 gezeigten Sperrstellungen geschaltet, so daß die Verbindung zwischen der Flüssigkeitsausgleichsleitung 6 und der Meßkammer 8 zwar aufrechterhalten bleibt, die Verbindung zwischen der Meßkammer 8 und der Referenzmeßkammer 10 jedoch unterbrochen wird.

Bei laufender Maschine und konstanten Betriebsbedingungen, welche durch die Drehzahl, die Last und die Temperatur gekennzeichnet sind, befindet sich nur noch ein Teil der Gesamtmenge des Öls in der Ölwanne 2, während der restliche Teil des Öles an anderen Stellen der Brennkraftmaschine verteilt ist. Nach wie vor repräsentiert jedoch das Ölniveau 14 in der Meßkammer 8 die in der Ölwanne 2 verbliebene Ölmenge.

Zeitliche Änderungen dieser Ölmenge durch Ölverbrauch bewirken ein Absinken des Ölniveaus 14 in der Meßkammer 8, während bei gleichbleibenden Umgebungsbedingungen, insbesondere Temperaturen, das Ölniveau 15 in der Referenzmeßkammer 10 auf gleicher Höhe bleibt.

Die Ölniveaus 14,15 werden wie folgt erfaßt: Mittels Laufzeitmessung der von den Niveausensoren 24,25 abgegebenen Schallsignale über die Strecken A1,A2 bis zu den Ölniveaus 14,15 und Messen der reflektierten Schallsignale werden Aussagen über die Höhe der Ölniveaus 14,15 gewonnen. Über die Signalflußleitungen 26,27 werden die Ölniveausignale in die Auswertvorrichtung 36 eingegeben. Dort wird in einem Subtrahierelement die Differenz (A2-A1) der Ölniveaus 14,15 gebildet. Da die Umgebungsbedingungen für die Meßkammer 8 und die Referenzmeßkammer 10 gleich sind, ist der Ölverbrauch 0 bei gleichbleibender Umgebungstemperatur direkt proportional zur ermittelten Differenz gemäß der folgenden Gleichung (1):

$$O = k\,(A2\text{-}A1) \qquad (1)$$

Wenn sich die Meßanordnung infolge einer Änderung der Umgebungstemperatur erwärmt, erhöhen sich sowohl die Schallgeschwindigkeit in Luft als auch die Ausdehnungen der Ölsäulen in der Meßkammer 8 und der Referenzmeßkammer 10. Dadurch kann es zu einem Fehler bei der Erfassung der Abstände A1 und A2 kommen, die sich in einen Fehler $F_S$ infolge Schallgeschwindigkeitsänderung und in einen Fehler $F_O$ infolge Ölausdehnung niederschlagen.

Bei einer Erwärmung dehnen sich sowohl die Meßkammer 8 als auch die Referenzmeßkammer 10 nicht nur in der Länge sondern auch im Durchmesser.

Während eine Längenänderung aufgrund der Differenzbildung A2-A1 unbeachtlich ist, wirkt sich die Durchmesserdehnung deshalb aus, weil der Ölspiegel 14 in der Meßkammer auch bei geweitetem Durchmesser aufgrund der Verbindung mit dem Öl im Sumpf 4 praktisch konstant bleibt, während der Ölspiegel 15 in der Referenzmeßkammer 10 infolge der Durchmesseraufweitung absinkt. Hierdurch stellt sich bei Erwärmung aufgrund erhöhter Umgebungstemperatur ein Fehler $F_D$ ein.

Alle diese Fehler können dadurch kompensiert werden, daß die Temperaturen der Luftsäule 19 und der Flüssigkeitssäule 21 in der Referenzmeßkammer 8 mittels der Temperatursensoren 28,32 gemessen und über Signalflußleitungen 30,34 in die Auswertvorrichtung 36 eingegeben werden. Dort werden diese Temperaturen zur Berechnung der genannten Fehler $F_S^2$, $F_{S1}$, $F_{O2}$, $F_{O1}$ und $F_D$ benutzt und dann ein korrigierter Ölverbrauch $O_{Korr}$ gemäß der folgenden Gleichung (2) ermittelt:

$$O_{korr} = k\,(A2\text{-}A1 + F_{S2}\text{-}F_{S1} + F_{O2}\text{-}F_{O1}\text{-}F_D) \qquad (2)$$

Die Luftschallfehler $F_{S2}$ und $F_{S1}$ sind dabei ebenso wie die Ölschallfehler $F_{O2}$ und $F_{O1}$ Funktionen der gemessenen Laufzeitdifferenzen der Abstände A2-A1, welche über die Signalflußleitungen 26,27 in die Auswertvorrichtung 36 eingegeben werden.

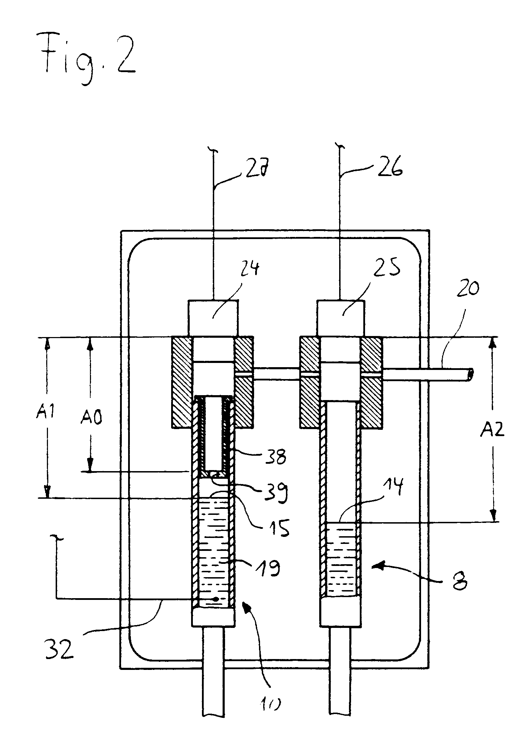

Bei der Ausführung nach Figur 2, in der gleiche Teile mit gleichen Bezugszeichen wie Figur 1 bezeichnet sind, ist die Temperaturmessung in der Luftsäule 19 eingespart. Stattdessen ist eine Referenzmeßstrecke AO dadurch gebildet, daß eine Hülse 38 aus einem Werkstoff mit sehr kleiner Wärmedehnung mit einem Loch 39 im Boden 40 in die Referenzmeßkammer 10 eingehängt ist. Diese Anordnung schafft eine stets gleichbleibende Referenzmeßstrecke AO, welche eine Ermittlung des aufgrund Temperaturänderung veränderlichen Abstandes A1 des Niveaumeßsensors 25 vom Ölniveau 15 in der Referenzmeßkammer nach folgender Gleichung ermöglicht:

$$A1 = \frac{A1(T)}{AO(T)} \times AO \qquad \ldots (3)$$

A1(T) und AO(T) sind die gemessenen Abstände bei einer erhöhten Temperatur T.

Zusätzlich sind dann noch die Fehler $F_{O2}$ und $F_{O1}$ sowie die Fehler $F_D$ der Auswertvorrichtung 36 zu berechnen.

Der Ausführung nach Figur 2 liegt die Erkenntnis zugrunde, daß der größte Fehlereinfluß aus der Temperaturmessung der Luftschallstrecke in den Kammern 8 und 10 herrührt. Durch die Vorgabe einer festen, einmal vermessenen Referenzmeßstrecke AO, die auch in einer weiteren Referenzmeßkammer angeordnet sein könnte, wird eine Aussage über die Laufzeitänderung aufgrund einer Temperaturänderung gewonnen, ohne daß eine Temperatur in der Luftsäule gemessen werden muß.

Bei der Erfindung wird die bisher erforderliche Isolierung und geregelte Heizung der Flüssigkeitsausgleichsleitung 6 ersetzt durch Vorsehen der Referenzmeßkammer 10 und durch Rückrechnen bei Temperaturänderungen der Umgebungstemperatur auf einen Normalzustand. Dies vereinfacht den gerätetechnischen Aufbau und führt zu einer schnelleren Erfassung der Meßwerte bei instationären Zuständen, d.h. bei schneller Temperaturänderung.

**Patentansprüche**

1. Meßanordnung zum Messen der Veränderung einer Flüssigkeitsmenge, insbesondere der Ölmenge in einer Brennkraftmaschine (1), in einem die Flüssigkeit aufnehmenden Speicherraum (2), insbesondere einer Ölwanne, mit einer Meßkammer (8), die mit dem Speicherraum (2) über eine Flüssigkeitsausgleichsleitung (6) in Verbindung steht, und einer Abstandsmeßvorrichtung (24) basierend auf der Messung der Reflexion oder Absorption von elektromagnetischen Wellen oder Schallwellen nach dem Impuls-Echo-Verfahren zum Erfassen des Flüssigkeitsniveaus (14) in der Meßkammer (8), wobei die Abstandsmeßvorrichtung (24) zur Abgabe von elektromagnetischen Wellen oder Schallwellen in dem Raum oberhalb des und mit Abstand vom Flüssigkeitsniveau (14) in der Meßkammer (8) angeordnet ist und wobei die Räume (18,22) über dem Flüssigkeitsniveau (16,14) im Speicherraum (2) und in der Meßkammer (8) mittels einer Druckausgleichsleitung (20) verbunden sind, dadurch **gekennzeichnet**, daß eine Referenzmeßkammer (10) gleicher Abmessungen wie die Meßkammer (8) vorgesehen und mit einer eigenen Abstandsmeßvorrichtung (25) gleicher Art wie in der Meßkammer (8) ausgerüstet ist, daß die Flüssigkeitsausgleichsleitung die Meßkammer (8) mit der Referenzmeßkammer (10) verbindet, daß eine Ventilanordnung (7,11) zum Absperren oder Freigeben des Durchflusses von Flüssigkeit zwischen Meßkammer (8) und Referenzmeßkammer (10) sowie Speicherraum (4) vorgesehen ist, daß die Räume (18,19) oberhalb der Flüssigkeitsniveaus (14,15) in der Meßkammer (8) und der Referenzmeßkammer (10) zum Druckausgleich durch eine Leitung verbunden sind, und daß eine Auswertvorrichtung (36) zum Ermitteln der von der Abstandsmeßvorrichtung erfaßten Niveaudifferenz der Flüssigkeitsniveaus in der Meßkammer (8) und der Referenzmeßkammer (10) vorgesehen ist.

2. Meßanordnung nach Anspruch 1, dadurch **gekennzeichnet**, daß Temperatursensoren (28,32) zum Messen der Temperaturen sowohl in der Flüssigkeitssäule (21) als auch in dem darüber befindlichen Luftraum (19) in der Referenzmeßkammer (10) vorgesehen sind, daß die Signalausgänge der Temperatursensoren (28,32) mit der Auswertvorrichtung (36) verbunden sind und daß in der Auswertvorrichtung (36) eine durch Temperaturänderung bedingte Änderung der Niveaudifferenz in den Meßkammern (8,10) rechnerisch kompensiert wird.

3. Meßanordnung nach Anspruch 1, dadurch **gekennzeichnet**, daß ein in die Flüssigkeitssäule (21) der Referenzmeßkammer (10) eintauchender Temperatursensor (32) vorgesehen ist, daß eine Hülse (38) aus einem Werkstoff mit sehr kleiner Wärmedehnung mit einem Loch (39) im Boden in der Referenzkammer (10) angeordnet ist und eine vermessene Referenzmeßstrecke (AO) fest vorgibt, welche bei einer Temperaturänderung mit dem Abstand (A1) zwischen der Abstandsmeßvorrichtung (25) und dem sich mit der Temperatur ändernden Flüssigkeitsniveau (15) in der Referenzmeßkammer (10) verglichen wird, und daß eine durch Temperaturänderung bedingte Niveauänderung in der Referenzmeßkammer (10) mittels der Auswertvorrichtung (36) rechnerisch kompensiert wird

## Claims

1. A measuring arrangement for measuring the change in an amount of liquid, more particularly the amount of oil in an internal combustion engine (1), in a storage space (2) holding the liquid, more particularly an oil tank, comprising a measuring chamber (8) connected to the storage space (2) via a liquid compensating pipe (6), and a distance-measuring device (24) based on measurement of the reflection or absorption of electromagnetic waves or sound waves by the pulse-echo method for detecting the level (14) of the liquid in the measuring chamber (8), the distance-measuring device (2), for the purpose of delivering electromagnetic waves or sound waves, being disposed in the space above and at a distance from the level (14) of liquid in the measuring chamber (8), and the spaces (18, 22) above the level (16, 14) of liquid in the storage space (2) and in the measuring chamber (8) being connected by a pressure-equalisation line (20), characterised in that a reference measuring chamber (10) having the same dimensions as the measuring chamber (8) is provided and equipped with a separate distance-measuring device (25) of the same kind as in the measuring chamber (8), the liquid compensating pipe connects the measuring chamber (8) to the reference measuring chamber (10), a valve arrangement (7, 11) is provided for blocking or opening the passage of liquid between the measuring chamber (8), the reference measuring chamber (10) and the storage space (4), the spaces (18, 19) above the level (14, 15) of liquid in the measuring chamber (8) and the reference measuring chamber (10) are connected by a pipe for equalising the pressure, and an evaluating device (36) is provided for determining the difference in level, measured by the distance-measuring device, between the liquid in the measuring chamber (8) and in the reference measuring chamber (10).

2. A measuring arrangement according to claim 1, characterised in that temperature sensors (28, 32) for measuring the temperatures in the liquid column (21) and in the air space (19) above it are provided in the reference measuring chamber (10), the signal outputs of the temperature sensors (28, 32) are connected to the evaluating device (36) and a change caused by temperature in the difference of level between the measuring chambers (8, 10) is compensated by computation in the evaluating device (36).

3. A measuring arrangement according to claim 1, characterised in that a temperature sensor (32) immersed in the column (21) of liquid in the reference measuring chamber (10) is provided, a sleeve (38) of material having very low heat expansion and with a hole (39) in the bottom is disposed in the reference chamber (10) and permanently presets a measured reference measuring distance (AO) which, in the event of a temperature change, is compared with the distance (A1) between the distance-measuring device (25) and the level (15), changing with temperature, of liquid in the reference measuring chamber (10), and a change in level due to a change of temperature in the reference measuring chamber (10) is compensated by computation in the evaluating device (36).

## Revendications

1. Dispositif de mesure de la variation de la quantité d'un fluide, en particulier de la quantité d'huile dans un moteur thermique (1), à l'intérieur d'un réservoir (2) de fluide, en particulier un carter d'huile, comprenant une chambre de mesure (8) qui communique avec le réservoir (2) par un conduit (6) d'équilibrage de niveau de liquide et un dispositif de mesure de distance (24) basé sur la mesure de réflexion ou absorption d'ondes électromagnétiques ou sonores selon le procédé d'écho d'impulsions pour détecter le niveau (14) de liquide dans la chambre de mesure (8), le dispositif de mesure de distance (24) étant disposé dans la chambre de mesure (8) à l'écart du niveau de liquide (14) pour fournir des ondes électromagnétiques ou sonores dans l' espace au-dessus du niveau de liquide (14), les espaces (18, 22) situés au-dessus du niveau de liquide (16, 14) dans le réservoir (2) et dans la chambre de mesure (8) étant reliés par un conduit d' équilibrage de pression (20), caractérisé en ce qu'il comprend une chambre de mesure de référence (10) de mêmes dimensions que la chambre de mesure (8), munie de son propre dispositif de mesure de distance (25) du même type que celui de la chambre de mesure (8), en ce que le conduit d'équilibrage de niveau de liquide relie entre elles la chambre de mesure (8) et la chambre de mesure de référence (10), en ce qu'il comprend un dispositif à soupape (7, 11) pour bloquer ou libérer l'écoulement de liquide entre la chambre de mesure (8) et la chambre de mesure de référence (10) ainsi qu'avec le réservoir (4), en ce que les espaces (18, 19) au-dessus du niveau de liquide (14, 15) dans la chambre de mesure (8) et dans la chambre de mesure de référence (10) sont reliés par un conduit d'équilibrage de pression, et en ce qu'il comprend un dispositif d' évaluation (36) pour fournir une indication de la différence des niveaux de liquide dans la chambre de mesure (8) et dans la chambre de mesure de référence (10) détectés par les dispositifs de mesure de distance.

2.  Dispositif de mesure selon la revendication 1, caractérisé en ce qu'il comprend des sondes de température (28, 32) pour mesurer les températures de la colonne de liquide (21) et de l'air (19) situé au-dessus dans la chambre de mesure de référence (10), en ce que les sorties de signal des sondes de température (28, 32) sont reliées au dispositif d'évaluation (36), et en ce qu'une variation de différence de niveau dans les chambres de mesure (8, 10), due à une variation de température, est compensée par calcul dans le dispositif d'évaluation (36).

3.  Dispositif de mesure selon la revendication 1, caractérisé en ce qu'il comprend une sonde de température (32) plongeant dans la colonne de liquide (21) de la chambre de mesure de référence (10), en ce qu'une chemise (38) en un matériau à très faible coefficient de dilatation thermique munie d'un trou (39) à sa partie inférieure est disposée dans la chambre de référence (10) et préétablit une zone de mesure connue (AO) qui est comparée, lors d'une variation de température, à la distance (A1) séparant le dispositif de mesure de distance (25) du niveau de liquide (15) variant avec la température dans la chambre de mesure de référence (10), et en ce qu'une variation de niveau dans la chambre de mesure de référence (10), due à une variation de température, est compensée par calcul à l'aide du dispositif d'évaluation (36).

Fig. 1

Fig. 2